# FASCICULE DE BREVET EUROPEEN

(11) **EP 2 693 285 B1**
(45) Date de publication et mention de la délivrance du brevet: **27.06.2018**
(21) Numéro de dépôt: 13178108.0
(22) Date de dépôt: 26.07.2013
(51) Int. Cl.: G05D 1/04, G01C 23/00, B64C 19/00, G05D 1/06

(54) **Procédé et dispositif d'aide à la gestion du vol d'un aéronef**
Verfahren und Vorrichtung zur Flugsteuerungassistenz für ein Luftfahrzeug
Method and device for assisting the flight management of an aircraft

(30) Priorité: 02.08.2012 FR 1257554
(43) Date de publication de la demande: 05.02.2014
(73) Titulaire: Airbus Opérations SAS, 31060 Toulouse (FR)
(72) Inventeur: Renault Leberquer, Charles, 31000 TOULOUSE (FR); Constans, Florian, 31820 PIBRAC (FR); Boada-Bauxell, Josep, 31400 TOULOUSE (FR); Louise, Pascale, 31100 TOULOUSE (FR)
(74) Mandataire: Gevers & Orès

(56) Documents cités:
- US-A- 5 978 715
- US-A1- 2008 312 779
- US-A1- 2011 118 908
- US-B1- 6 995 690

## Description

La présente invention concerne un procédé et un dispositif d'aide à la gestion du vol d'un aéronef, en particulier d'un avion de transport.

On sait que, dans un environnement opérationnel dynamique, la bonne gestion du vol d'un aéronef réside pour l'essentiel dans la capacité de l'équipage à ajuster et contrôler la trajectoire suivie et le profil de vitesse associé.

La plupart des aéronefs disposent de moyens permettant le contrôle et maintien de paramètres de vol à l'aide d'un système de pilotage automatique. Ce système permet, par exemple, le maintien d'une altitude, d'une vitesse, d'une vitesse verticale, d'un cap,... Les aéronefs dotés d'un système de pilotage automatique qui permet de suivre des consignes de guidage de façon automatique, sont pourvus d'un équipement (ou unité de commande), appelé FCU (« Flight Control Unit » en anglais) sur les avions de type AIRBUS et MCP (« Mode Control Panel » en anglais) sur les avions de type BOEING, qui permet à un pilote de l'avion d'entrer des consignes de guidage dans le système de guidage. De façon générale, le pilote choisit une consigne de guidage, puis il commande l'engagement (activation) du mode de guidage associé, pour qu'il prenne en compte soit la valeur entrée (dans un mode dit « sélecté »), soit une valeur calculée par le système selon divers critères (comme par exemple dans le cas particulier de suivi d'un plan de vol préprogrammé).

Un élément clé du processus de gestion de la trajectoire et de la vitesse asservie est donc la transmission des intentions de l'équipage aux systèmes embarqués de l'aéronef.

La gestion du plan vertical du vol de l'aéronef met en jeu des problématiques de gestion de l'énergie totale, combinaison de l'énergie potentielle (liée à l'altitude) et de l'énergie cinétique (liée à la vitesse). Toute modification de la trajectoire dans le plan vertical aura un impact sur l'évolution de la vitesse de l'aéronef et vice versa, la modification de l'énergie totale de l'aéronef étant limitée et donnée par les performances aérodynamiques et propulsives de l'aéronef.

Dans un environnement opérationnel dynamique, il arrive que l'équipage souhaite rapidement modifier l'altitude de l'aéronef ou bien sa vitesse, ainsi que la façon dont l'aéronef va rejoindre ce ou ces nouveaux objectifs. L'équipage peut avoir besoin de savoir à quel horizon, à savoir à quelle distance à l'avant de l'aéronef le long de la trajectoire asservie, l'aéronef va effectivement atteindre ces objectifs, horizon qui dépend des performances de l'aéronef.

Par exemple, l'aéronef peut avoir :
- à pénétrer dans un espace aérien à une vitesse maximale imposée ; ou
- à quitter son niveau de vol initial pour rejoindre un niveau de vol inférieur avant une distance donnée, et ce, afin de satisfaire des contraintes de séparabilité avec d'autres aéronefs volant à ce niveau de vol initial.

Si les systèmes de pilotage automatique et les interfaces associées permettent de modifier les consignes de la trajectoire dans le plan vertical (altitude ou vitesse), les interfaces ne permettent pas de visualiser directement où va l'aéronef ou seulement de manière partielle et approximative. Par ailleurs, les systèmes embarqués de gestion automatisée du vol n'offrent pas la possibilité d'ajuster directement la position d'atteinte de ces objectifs en vitesse et altitude.

Par ailleurs, on connaît :
- par le document US-2008/312779, un calculateur de gestion de vol d'un aéronef prenant en compte une contrainte de vitesse lors de l'approche d'une piste d'atterrissage, ladite contrainte de vitesse étant utilisée si elle est supérieure à une vitesse dépendant de conditions courantes ; et
- par le document US-6 995 690, un dispositif d'affichage d'informations de vol pour un poste de pilotage d'un aéronef, destiné à aider le pilote à empêcher des collisions avec le terrain ou à rendre des approches plus sûres.
- par le document US-2011/118908, un procédé d'aide à la gestion de vol proposant une interface interactive pour gérer le profil de vitesse d'un aéronef.
La présente invention a pour objet de remédier aux inconvénients précités. Elle concerne un procédé d'aide à la gestion du vol d'un aéronef, en particulier d'un avion de transport, qui permet notamment à l'équipage de gérer par objectif les changements de vitesse et les changements d'altitude de l'aéronef.

A cet effet, selon l'invention, ledit procédé, selon lequel on prévoit une unité d'interface permettant à un pilote d'entrer au moins l'une des consignes suivantes : une consigne de vitesse et une consigne d'altitude, ainsi que des moyens de pilotage automatique qui appliquent de façon automatique audit aéronef des consignes ainsi entrées,
est remarquable en ce que :
a) on prévoit, de plus, des moyens d'interface permettant à un pilote de générer une contrainte géographique représentée par une distance à l'avant de l'aéronef, définissant une position, à laquelle il souhaite qu'une consigne entrée soit atteinte ; et
b) on asservit automatiquement, de façon combinée, un système de poussée automatique de l'aéronef et des aérofreins de l'aéronef (en complément de moyens usuels de pilotage de la trajectoire verticale), pour que l'aéronef atteigne ladite consigne entrée, à la position définie par ladite contrainte géographique.

Ainsi, la présente invention offre la possibilité au pilote de modifier directement la position à laquelle est atteint un objectif défini en termes de consigne de vitesse et/ou de consigne d'altitude et permet d'en assurer la réalisation à l'aide d'un asservissement automatique approprié (ajustement de la poussée des moteurs et extension des aérofreins).

Le procédé conforme à l'invention présente également les avantages suivants :
- en utilisant la distance en avant de l'aéronef pour indiquer où le pilote souhaite atteindre un objectif en altitude et/ou en vitesse, on s'affranchit de la complexité et de la limitation d'avoir à situer cette contrainte sur un plan de vol. De plus, cette notion de distance en avant de l'aéronef est interprétable quel que soit le mode de guidage de l'aéronef ;
- un pilote qui veut raccourcir la distance parcourue avant l'atteinte d'une valeur cible d'altitude (respectivement de vitesse) doit uniquement définir la nouvelle distance. Ensuite, l'invention gère automatiquement notamment les aérofreins (en complément de moyens usuels de pilotage de la trajectoire verticale) de façon à atteindre la cible tout en satisfaisant la contrainte géographique. La tâche de pilotage est simplifiée car le contrôle manuel des aérofreins ne fait plus partie de sa charge de travail ; et
- la gestion combinée (ou intégrée) du système de poussée automatique et des aérofreins évite des situations où les deux organes de contrôle correspondants sont utilisés en même temps et participe à la réduction de consommation de fuel.

En outre, avantageusement, à une étape c), on détermine la trajectoire volée par l'aéronef selon les consignes du mode de guidage actif et selon le profil de poussée et des aérofreins commandé pour atteindre ladite consigne à ladite contrainte géographique, et on présente au moins une partie de ladite trajectoire sur un écran de visualisation, ainsi que les endroits d'atteinte des consignes de vitesse et d'altitude.

Plus précisément, dans le cadre de l'invention, on présente ces informations :
- sur un écran de visualisation verticale de paramètres de navigation du poste de pilotage de l'aéronef, de type VD (« Vertical Display) ; et/ou
- sur un écran de visualisation horizontale de paramètres de navigation, de type ND (« Navigation Display » en anglais).

Pour toute modification du paramètre d'altitude et/ou du paramètre de vitesse asservi, cet affichage conforme à l'invention permet ainsi une compréhension aisée par l'équipage de l'endroit où l'aéronef atteindra son objectif d'altitude et/ou de vitesse.

De plus, l'invention prévoyant de réaliser un contrôle automatique des aérofreins de l'aéronef, la charge de travail de l'équipage est réduite par rapport au contrôle usuel. En effet, aujourd'hui les aérofreins sont contrôlés manuellement par l'équipage. Quand le pilote considère que les taux de décélération et/ou descente ne sont pas suffisants pour atteindre des valeurs cibles à l'endroit désiré, il sollicite une déflexion des aérofreins. Sur la plupart des aéronefs, le moyen de contrôle des aérofreins consiste en une manette, la commande des aérofreins étant gérée par la position de cette manette.

Dans le cadre de la présente invention, le pilote peut indiquer la distance à l'avant de l'aéronef (à laquelle il souhaite qu'une consigne entrée soit atteinte) de différentes manières, et notamment de manière numérique dans une page système dédiée.

Toutefois, dans un mode de réalisation préféré, on prévoit sur ledit écran de visualisation au moins un objet graphique qui est réalisé sous forme d'un moyen d'interaction qui représente :
- d'une part, un élément de restitution qui indique l'endroit d'atteinte de ladite consigne ; et
- d'autre part, un élément de commande qui peut être saisi et déplacé par un pilote afin de modifier la distance à l'avant de l'aéronef, à laquelle il souhaite qu'une consigne entrée soit atteinte, et ainsi de générer une contrainte géographique.

Par ailleurs, dans le cas où une contrainte géographique ne peut plus être tenue par l'asservissement des moyens de l'aéronef, par exemple suite à un changement des conditions extérieures (vent,...), l'élément indiquant la contrainte géographique peut changer d'aspect pour alerter l'équipage que celle-ci ne sera pas tenue. Un élément de restitution donnant l'endroit réel d'atteinte de la cible est dans ce cas à nouveau présenté, en plus de la trajectoire courante.

Dans un mode de réalisation particulier, on détermine un profil d'aérofreins qui assure l'atteinte de la contrainte géographique générée par le pilote tout en satisfaisant au moins un critère d'optimisation particulier. Ce critère peut être une optimisation en termes de consommation de carburant, de confort cabine et/ou de fatigue de la structure. Ce critère ou ces critères peuvent être relâchés dans le but d'absorber des perturbations (vent,...) et des erreurs de modélisation.

Par ailleurs, avantageusement :
- on détermine le point auquel une consigne entrée peut être atteinte au plus tôt par l'aéronef, et on présente sur un écran de visualisation un symbole qui localise ce point. Ceci permet à l'équipage, lorsque l'aéronef est stabilisé à un taux de descente, de connaître ses marges opérationnelles dans la gestion de la vitesse s'il souhaite utiliser les aérofreins ; et/ou
- on détermine et on affiche une trajectoire prédite susceptible d'être suivie par l'aéronef avec les aérofreins braqués au maximum.

En outre, avantageusement, on détermine et on intègre dans l'affichage les phases transitoires de la trajectoire de vol, qui de façon usuelle existent lors d'une transition de pente et/ou de l'accélération suite notamment à la modification des paramètres de vol ou l'atteinte d'une consigne.

En outre, dans un mode de réalisation particulier, lorsque l'aéronef est en montée ou en descente en respectant une consigne de vitesse verticale ou de pente, on prévoit des moyens permettant à un opérateur de définir une nouvelle valeur cible correspondante. Plus précisément, lorsque l'aéronef est en mode de montée ou de descente en respectant une vitesse verticale (V/S) ou une pente (FPA), on peut ainsi définir une nouvelle valeur cible de guidage V/S ou FPA à partir de la désignation d'un point en avant de l'aéronef de l'atteinte de l'altitude cible.

Par ailleurs, dans un mode de réalisation particulier, on applique ledit procédé :
- à des consignes, dites préréglées, qui seront uniquement appliquées à l'aéronef après une validation ; ou
- au cas particulier de suivi d'un plan de vol préprogrammé, comme précisé ci-dessous.

La présente invention concerne également un dispositif d'aide à la gestion du vol d'un aéronef, en particulier d'un avion de transport.

A cet effet, selon l'invention, ledit dispositif du type comprenant une unité d'interface permettant à un pilote d'entrer au moins l'une des consignes suivantes : une consigne de vitesse et une consigne d'altitude, ainsi que des moyens de pilotage automatique qui appliquent de façon automatique audit aéronef des consignes entrées à l'aide de ladite unité d'interface,
est remarquable en ce qu'il comporte de plus :
- des moyens d'interface permettant à un pilote de générer une contrainte géographique représentée par une distance à l'avant de l'aéronef, définissant une position à laquelle il souhaite qu'une consigne entrée soit atteinte ; et
- des moyens d'asservissement qui commandent automatiquement, de façon combinée, un système de poussée automatique de l'aéronef et des aérofreins de l'aéronef (en complément de moyens usuels de pilotage de la trajectoire verticale) pour que l'aéronef atteigne ladite consigne entrée, à la position (ou endroit) définie par ladite contrainte géographique.

En outre, dans un mode de réalisation particulier, ledit dispositif comporte, de plus, des moyens pour déterminer, de façon automatique, la trajectoire suivie par l'aéronef pour respecter ladite consigne et ladite contrainte géographique, et des moyens d'affichage pour présenter cette trajectoire sur au moins un écran de visualisation (de type ND ou de type VD).

Avantageusement, ledit écran de visualisation comprend au moins un objet graphique qui est réalisé sous forme d'un moyen d'interaction qui représente :
- d'une part, un élément de restitution qui indique l'endroit d'atteinte de ladite consigne ; et
- d'autre part, un élément de commande qui peut être saisi et déplacé par un pilote afin de modifier la distance à l'avant de l'aéronef, à laquelle il souhaite qu'une consigne entrée soit atteinte, et ainsi de générer une contrainte géographique.

En outre, dans le cas où une contrainte géographique ne peut plus être tenue par l'asservissement des moyens de l'aéronef, par exemple suite à un changement des conditions extérieures (vent,...), l'élément indiquant la contrainte géographique peut changer d'aspect pour alerter l'équipage que celle-ci ne sera pas tenue. Un élément de restitution donnant l'endroit réel d'atteinte de la cible est dans ce cas à nouveau présenté, en plus de la trajectoire courante.

Par ailleurs, dans un mode de réalisation particulier, lesdits moyens d'asservissement comportent des moyens de détermination automatique de commandes du système de poussée automatique et des aérofreins.

La présente invention concerne également un aéronef, en particulier un avion de transport, qui est muni d'un dispositif d'aide à la gestion du vol, tel que celui précité.

Les figures du dessin annexé feront bien comprendre comment l'invention peut être réalisée. Sur ces figures, des références identiques désignent des éléments semblables.
La figure 1 est le schéma synoptique d'un dispositif d'aide à la gestion du vol conforme à l'invention.
Les figures 2 à 4 représentent schématiquement différents affichages de données de navigation, qui permettent de bien mettre en évidence les caractéristiques essentielles de la présente invention.
Les figures 5 à 7 sont les schémas synoptiques de moyens de calcul d'un dispositif conforme à l'invention.
Les figures 8 à 10 illustrent différents affichages successifs, relatifs à un exemple particulier de mise en oeuvre de l'invention.

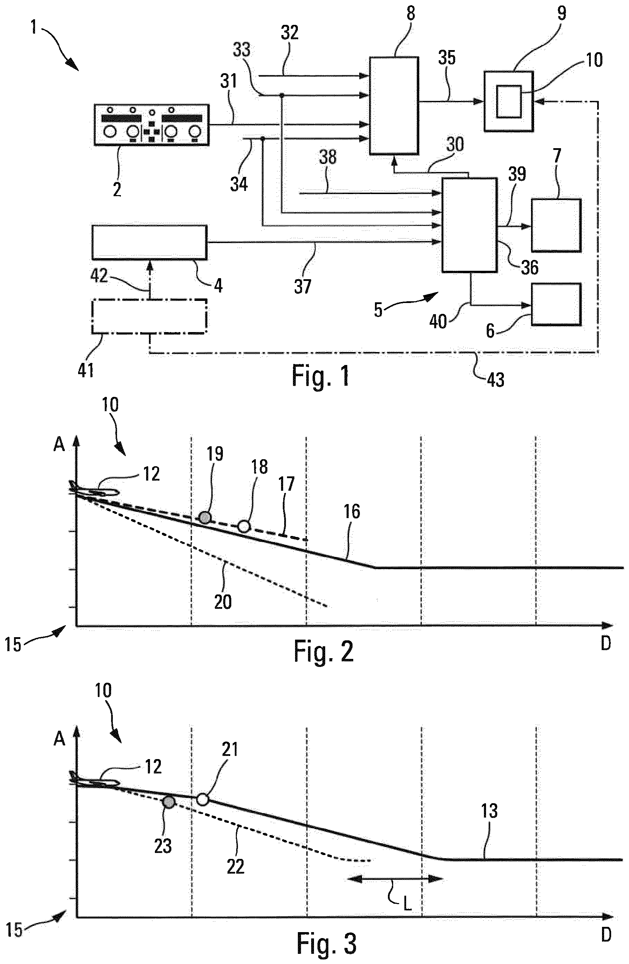

Le dispositif 1 conforme à l'invention et représenté schématiquement sur la figure 1 est destiné à aider à la gestion du vol d'un aéronef (non représenté), en particulier d'un avion de transport.

Ledit dispositif 1 qui est embarqué sur l'aéronef est du type comprenant :
- une unité d'interface 2 de contrôle de vol, de préférence de type FCU (« Flight Control Unit » en anglais), qui permet à un pilote d'entrer dans le dispositif 1 au moins l'une des consignes suivantes : une consigne de vitesse et une consigne d'altitude ; et
- des moyens de pilotage automatique qui appliquent de façon automatique audit aéronef des consignes entrées à l'aide de ladite unité d'interface 2.

Selon l'invention, ledit dispositif 1 comporte de plus, comme représenté sur la figure 1 :
- des moyens d'interface 4 qui permettent à un pilote de générer une contrainte géographique représentant une distance à l'avant de l'aéronef, à laquelle il souhaite que soit atteinte une consigne (de vitesse ou d'altitude) entrée à l'aide de l'unité d'interface 2 ; et
- des moyens d'asservissement 5 qui commandent automatiquement, de façon combinée, un système de poussée automatique 6 de l'aéronef et des aérofreins 7 de l'aéronef, en complément des moyens usuels de pilotage de la trajectoire verticale, pour que l'aéronef atteigne ladite consigne entrée, à l'endroit défini par ladite contrainte géographique.

Ainsi, ledit dispositif 1 offre la possibilité au pilote de modifier directement la position à laquelle est atteint un objectif défini en termes de consigne de vitesse et/ou de consigne d'altitude et assure sa réalisation à l'aide d'un asservissement approprié (ajustement de la poussée des moteurs 6 et de l'extension des aérofreins 7).

Le dispositif 1 conforme à l'invention présente également les avantages suivants :
- en utilisant la distance en avant de l'aéronef (dans le sens de vol) pour indiquer la position où le pilote souhaite atteindre un objectif en altitude et/ou vitesse, on s'affranchit de la complexité et de la limitation d'avoir à situer cette contrainte sur un plan de vol. De plus, cette notion de distance en avant de l'aéronef est interprétable quel que soit le mode de guidage de l'aéronef ;
- un pilote qui veut raccourcir la distance parcourue avant l'atteinte d'une valeur cible d'altitude (respectivement de vitesse) doit uniquement définir la nouvelle distance. Ensuite, le dispositif 1 gère automatiquement les moteurs et les aérofreins de façon à atteindre la cible tout en satisfaisant la contrainte géographique. La tâche de pilotage est simplifiée, car le contrôle manuel des aérofreins ne fait plus partie de sa charge de travail ; et
- la gestion combinée (ou intégrée) du système de poussée automatique 6 et des aérofreins 7 évite des situations où les deux organes de contrôle sont utilisés en même temps et participe à la réduction de consommation de fuel.

En outre, dans un mode de réalisation particulier, ledit dispositif 1 comporte, de plus, des moyens 8 pour déterminer, de façon automatique, la trajectoire suivie par l'aéronef pour respecter une consigne et une contrainte géographique correspondante, et des moyens d'affichage 9 pour afficher cette trajectoire sur un écran de visualisation 10.

Pour toute modification du paramètre d'altitude et/ou du paramètre de vitesse asservi, cet affichage conforme à l'invention permet une compréhension aisée par l'équipage de l'endroit où l'aéronef atteindra son objectif d'altitude et/ou de vitesse.

Plus précisément, dans le cadre de la présente invention lesdits moyens d'affichage 9 sont susceptibles de présenter :
- la trajectoire verticale (d'une trajectoire considérée) sur un écran 10 de visualisation verticale de paramètres de navigation du poste de pilotage de l'aéronef, de type VD (« Vertical Display »), comme représenté par exemple sur les figures 2 à 4 ; et/ou
- la trajectoire latérale (d'une trajectoire considérée) sur un écran de visualisation horizontale de paramètres de navigation, de type ND (« Navigation Display » en anglais).

L'affichage réalisé sur un écran VD ou sur un écran ND s'applique bien entendu à tous les éléments susceptibles d'être affichés dans le cadre de la présente invention

Le dispositif 1 conforme à l'invention permet donc à l'équipage de définir des contraintes géographiques pour l'atteinte d'une altitude cible et/ou d'une vitesse cible. Dans le cadre de la présente invention, le pilote peut indiquer la distance à l'avant de l'aéronef (à laquelle il souhaite qu'une consigne entrée soit atteinte) de différentes manières, et notamment de manière numérique dans une page système dédiée.

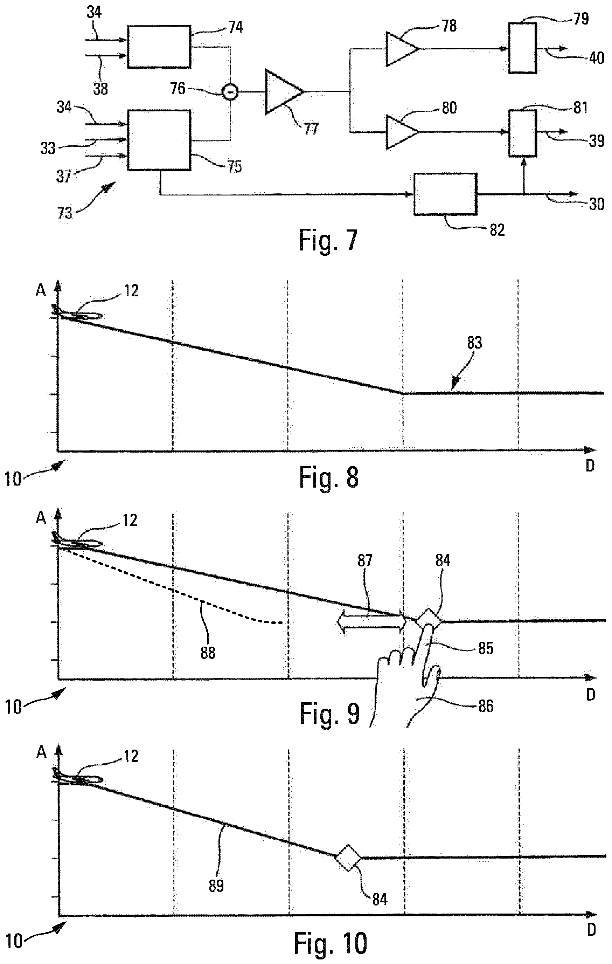

Toutefois, dans une variante de réalisation, ledit écran de visualisation 10 comprend au moins un objet graphique 84 (figures 9 et 10) qui est réalisé sous forme d'un moyen d'interaction qui représente :
- d'une part, un élément de restitution qui présente l'endroit d'atteinte de la consigne (de vitesse ou d'altitude) ; et
- d'autre part, un élément de commande (moyens 4) qui peut être saisi et déplacé par un pilote afin de modifier la distance à l'avant de l'aéronef, à laquelle il souhaite qu'une consigne entrée soit atteinte, et ainsi de générer une contrainte géographique.

Dans cette variante de réalisation, les prédictions d'atteinte des consignes (altitude, vitesse) sont affichées de manière graphique à travers des symboles ou objets graphiques 84, et l'équipage peut donc interagir avec ces symboles pour définir un rendez-vous. Dans le cadre de l'invention, on appelle « rendez-vous » une distance devant l'aéronef où l'équipage souhaite qu'une consigne soit atteinte. Cette variante de réalisation permet une interaction plus intuitive pour le pilote grâce au retour graphique des trajectoires/symboles, suite à la création d'un rendez-vous en altitude et/ou en vitesse. Cela permet également de pouvoir placer un rendez-vous en énergie par rapport à d'autres éléments affichés tels qu'une entrée d'une zone ATC, le terrain, la météo, le plan de vol.

Dans un mode de réalisation particulier, le dispositif 1 comprend de plus une commande prédictive d'aérofreins. En connaissant les capacités de l'aéronef à atteindre une cible de façon nominale, on détermine un profil d'aérofreins qui assure l'atteinte de la contrainte géographique générée par le pilote tout en satisfaisant au moins un critère particulier. Ce critère peut être une optimisation en termes de consommation de carburant, de confort cabine et/ou de fatigue de la structure. Ce critère ou ces critères peuvent être relâchés dans le but d'absorber des perturbations (vent,...) et des erreurs de modélisation.

Dans un autre mode de réalisation, l'asservissement des aérofreins 7 peut s'étendre au cas particulier de suivi d'un plan de vol préprogrammé lorsque les contraintes d'altitude et/ou de vitesse sont connues à l'avance et géographiquement positionnées. Le dispositif 1 connaissant la prochaine contrainte d'altitude et/ou de vitesse, propose directement le niveau des aérofreins nécessaire pour atteindre la cible là où la contrainte d'altitude et/ou de vitesse est située.

Par ailleurs, dans un autre mode de réalisation, les prédictions du profil vertical et de vitesse prennent en compte le profil d'utilisation des aérofreins correspondant à ce que va suivre l'asservissement pour tenir la contrainte d'altitude et/ou de vitesse. Ce mode de réalisation permet d'avoir une cohérence entre les objectifs fixés et les éléments de prédiction corroborant l'atteinte de cet objectif.

Dans une variante de réalisation, l'atteinte au plus tôt de la vitesse cible peut également être calculée avec l'hypothèse d'une descente selon la pente courante et indiquée. Cela permet à l'équipage de comprendre, lorsque l'aéronef est stabilisé à un taux de descente, quelles sont ses marges opérationnelles dans la gestion de la vitesse s'il souhaite utiliser les aérofreins, comme représenté sur la figure 2.

Chacune des figures 2 à 4 illustre, à titre d'exemple, un affichage d'un plan vertical sur un écran 10 de type VD, qui comprend notamment :
- un symbole 12 illustrant la position de l'aéronef ;
- un graphique 15 illustrant un plan vertical et comprenant une échelle de distance D et une échelle d'altitude A ; et
- sur ce graphique 15, le profil vertical de la trajectoire prédite qui est mis en évidence par un tracé en trait continu épais.

Sur la figure 2, ledit profil vertical 16 est relatif à la trajectoire verticale prédite pour les caractéristiques suivantes de l'aéronef : poussée au ralenti, configuration lisse, aérofreins rentrés.

De plus, sur la figure 2, on a également représenté :
- un tracé 17 en tirets épais, qui illustre le profil vertical suivant la pente courante de l'aéronef ;
- un symbole 18 représenté sous forme d'un cercle, qui indique la position où sera atteinte la cible de vitesse selon la pente courante ;
- un symbole 19 représenté sous forme d'un cercle grisé, qui indique la position où sera atteinte au plus tôt la vitesse cible, avec les aérofreins braqués au maximum, selon la pente courante, conformément à la dernière variante de réalisation ; et
- un tracé 20 en tirets fins, qui illustre le profil vertical avec les aérofreins braqués au maximum.

Dans une autre variante de réalisation, un calcul intégré du profil vertical et de vitesse incluant les phases transitoires peut être utilisé pour prédire l'endroit d'atteinte des valeurs cibles (altitude et vitesse), en particulier dans le cas où l'aéronef est en dehors du plan de vol.

Dans cette variante de réalisation, les consignes entrées sur l'unité d'interface 2 pour le contrôle du vol (FCU) comprennent :
- des consignes verticales ;
   - l'altitude ;
   - la vitesse verticale (« Vertical Speed » en anglais ou VS) ;
   - la pente (« Flight Path Angle » en anglais ou FPA) ;
- des consignes latérales :
   - le cap (« HEADING » en anglais ou HDG) ;
   - la route (« TRACK » en anglais ou TRK) ;
- des consignes de vitesse :
   - la vitesse air (« Current Air Speed » en anglais ou CAS) ;
   - le Mach ; et
- une sélection de modes de guidage (hors suivi de plan de vol) :
   - un mode de maintien d'altitude ;
   - un mode de rejointe d'altitude (montée ou descente) en respectant une vitesse air ;
   - un mode de rejointe d'altitude (montée ou descente) en respectant une pente ;
   - un mode de montée ou de descente en respectant une vitesse verticale ;
   - un mode de maintien ou de rejointe d'un cap ;
   - un mode de maintien ou de rejointe d'une route ;
   - un mode de capture ou de maintien de l'axe d'approche sur un plan horizontal ;
   - un mode de capture ou de maintien de l'axe d'approche sur un plan horizontal et vertical ; et
   - une prise en compte des modes de guidage dit « armés », dont l'engagement interviendra lorsque des conditions d'engagement appropriées seront remplies.

Dans cette variante de réalisation, le principe général consiste à prédire et afficher le profil vertical et de vitesse de l'aéronef dans tous les modes de guidage de l'aéronef, et notamment dans les modes autres que le suivi de plan de vol en tenant compte de tout ou partie des éléments suivants :
- des paramètres courants de l'aéronef (vitesse air, altitude, angle de roulis, mode engagé, pente courante, accélération longitudinale et verticale courante, masse, centrage) ;
- des modes sélectionnés ou armés ;
- des consignes choisies par l'équipage ;
- d'un profil latéral (profil angle de roulis) ;
- d'un profil de mobilisation des surfaces de l'aéronef (aérofreins, configurations de l'aéronef pour l'approche) et éventuellement d'un profil de poussée associée ; et
- d'un profil atmosphérique (vent, température) qui est, soit basé sur les conditions courantes, soit basé sur une modélisation existante issue du système de gestion du vol.

Dans cette variante de réalisation, le profil vertical et de vitesse repose sur :
- la connaissance et la modélisation des lois de guidage de vol de l'aéronef dans chacun de ses modes de guidage ;
- la modélisation de la mise en dynamique de l'aéronef dans l'atmosphère ;
- la connaissance des logiques et conditions de transition d'un mode de guidage vers un autre ; et
- la connaissance d'un modèle des performances aérodynamiques de l'aéronef.

Cette prédiction intégrée profil vertical/vitesse permet à l'équipage d'avoir des prédictions réalistes, en particulier :
- en vitesse :
   - lorsque l'aéronef n'est pas stabilisé à un taux de descente ;
   - lorsque l'aéronef sera stabilisé en vitesse seulement une fois la descente achevée ;
   - lorsque le profil de descente ne se fait pas à pente constante ; et
- en altitude :
   - lorsqu'il y a, en même temps, un changement de vitesse et que l'aéronef n'est pas guidé avec un mode imposant une pente de descente fixe.

La gestion des aérofreins est alors plus simple, puisque le pilote dispose d'un retour de la prédiction qui est précis, stable et immédiat suite à la modification d'une consigne puis d'un rendez-vous lié à cette consigne.

Ce même calcul peut être mené avec l'hypothèse des aérofreins déployés au maximum, pour montrer au pilote ses marges opérationnelles s'il souhaite utiliser les aérofreins, comme représenté sur la figure 3. Cette figure 3 montre le profil vertical 13 de la trajectoire prédite prenant en compte le profil de vitesse et le mode de guidage (à savoir dans cet exemple, un mode de descente sans contrainte), et un symbole 21 représenté sous forme d'un cercle, qui indique la position où sera atteinte la cible de vitesse le long de ladite trajectoire prédite 13.

Sur cette figure 3, on a également représenté :
- en traits interrompus, une trajectoire verticale prédite 22 avec les aérofreins braqués au maximum, en prenant en compte le mode de guidage et le profil de vitesse associé (à savoir dans cet exemple, un mode de descente sans contrainte) ; et
- un symbole 23 représenté sous forme d'un cercle grisé, qui indique la position où la cible de vitesse peut être atteinte au plus tôt (avec les aérofreins braqués au maximum).

Sur la figure 3, nous avons rajouté, dans un but d'explication de l'invention, une double flèche L qui n'est pas affichée par les moyens d'affichage 9 sur l'écran 10. Cette double flèche L illustre la marge de distance dans le cas d'utilisation des aérofreins pour atteindre la prochaine cible d'altitude, par rapport à la trajectoire prédite 13 sans braquage des aérofreins.

En outre, dans un mode de réalisation particulier, lorsque l'aéronef est en mode de montée ou de descente en respectant une vitesse verticale (V/S) ou une pente (FPA), le dispositif 1 prévoit des moyens pour définir une nouvelle valeur cible de guidage V/S ou FPA à partir de la désignation d'un point en avant de l'aéronef de l'atteinte de l'altitude cible.

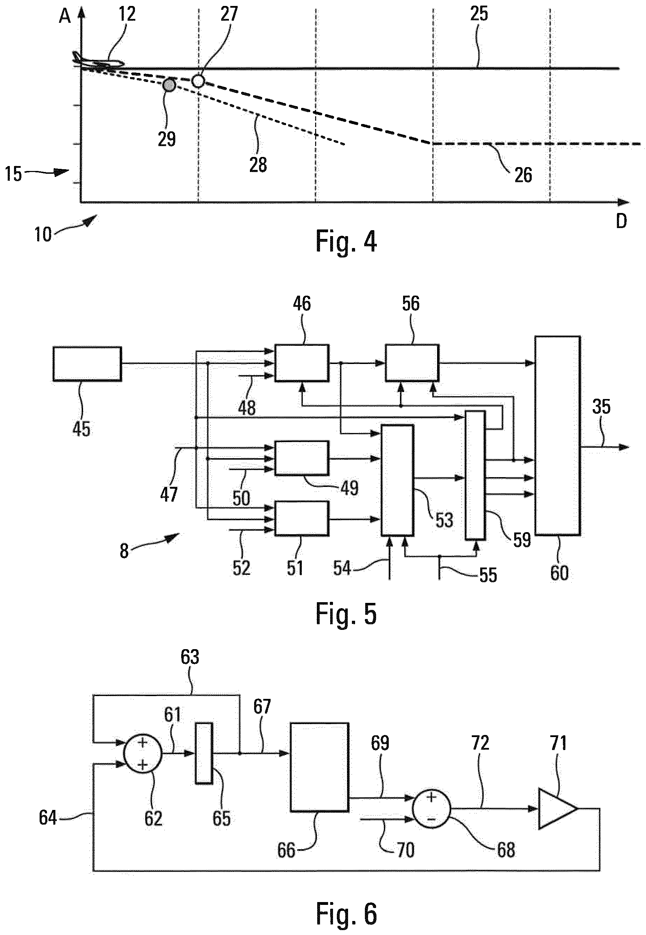

Les consignes entrées sur l'unité d'interface 2 pour le contrôle du vol (FCU) peuvent être prises en compte directement par le dispositif 1 dès que leur valeur est modifiée. Dans certains cas, il est nécessaire de valider une modification de la consigne pour qu'elle soit prise en compte (par exemple, une consigne de changement de niveau de vol depuis un mode de suivi d'un niveau de vol). Dans ces cas, les consignes, avant validation, sont dites consignes préréglées (ou de « preset »). Ainsi, dans un mode de réalisation particulier, les caractéristiques de la présente invention sont étendues à de telles consignes préréglées. Une prédiction intégrée vitesse/altitude peut être réalisée à partir desdites consignes préréglées avec un profil d'aérofrein courant et un profil d'aérofrein limite (plein braquage des aérofreins), comme représenté sur la figure 4. Cette figure 4 est une représentation de la prédiction verticale et de vitesse préréglée et d'une limite préréglée issue d'un calcul intégré vertical/vitesse incluant les phases transitoires (cas d'une valeur préréglée de descente sans contrainte avec une vitesse sélectée préréglée).

Sur cette figure 4, on a représenté :
- en trait continu épais, la trajectoire verticale courante 25 ;
- en tirets épais, la trajectoire verticale prédite 26 préréglée prenant en compte le profil de vitesse préréglé et le mode de guidage préréglé (à savoir dans cet exemple un mode de descente sans contrainte), avec un symbole 27 représenté sous forme d'un cercle, qui indique la position où sera atteinte la vitesse cible préréglée le long de cette trajectoire 26 ; et
- en tirets fins, la trajectoire verticale prédite 28 préréglée avec les aérofreins déployés au maximum prenant en compte le profil de vitesse préréglé et le mode de guidage préréglé (à savoir dans cet exemple un mode de descente sans contrainte), avec un symbole 29 représenté sous forme d'un cercle grisé, qui indique la position où sera atteinte au plus tôt la vitesse cible préréglée le long de ladite trajectoire 28, avec les aérofreins déployés au maximum.

L'équipage peut également créer des rendez-vous en altitude et/ou vitesse dit « de preset ». Cela permet au pilote d'observer les marges que lui apportent les aérofreins, en particulier dans le cas d'une négociation ATC, avec une contrainte difficilement réalisable sans leur utilisation.

On réalise ci-dessous une description détaillée du dispositif 1 de la figure 1.

Les moyens 8 dudit dispositif 1 prennent en compte :
- les consignes de l'unité 2, reçues par une liaison 31 ;
- les paramètres de vol précédents et actuels reçus par une liaison 32 ;
- le mode de guidage, reçu par une liaison 33 ;
- un profil d'évolution des surfaces (aérofrein, configuration aéronef, train) et éventuellement de la poussée, reçus par une liaison 30, ainsi qu'un niveau courant des surfaces, reçu par la liaison 33 ; et
- un profil des conditions atmosphériques (températures, vent) le long de la trajectoire, reçu par une liaison 34.

Les moyens 8 fournissent en sortie les trajectoires latérales (x,y), verticales (s,z), ainsi que la position(x,y,s,z) de l'atteinte des consignes de vitesse et d'altitude, qui sont transmises aux moyens d'affichage 9 (via une liaison 35).

Le calcul de trajectoire prédite, mis en oeuvre par les moyens 8, utilise donc, comme entrée, un profil d'aérofreins courant (reçu par la liaison 30) et les consignes courantes du mode sélecté. Toutefois, ce même calcul peut être reconduit avec, comme entrée, des consignes préréglées et/ou un profil d'aérofreins sortis au maximum jusqu'à l'atteinte de la/ou des consignes entrées par le pilote. L'utilisation de la prédiction courante avec un braquage maximal des aérofreins permet de prédire l'atteinte de la consigne sélectée au plus tôt et donc de borner un rendez-vous dans les moyens 4 de définition de la contrainte.

Les moyens d'asservissement 5 comprenant des moyens 36 de calcul de la commande pour rejoindre la contrainte. Ces moyens de calcul 36 prennent en compte les informations de la contrainte géographique (liaison 37) et les cibles associées à cette contrainte. Ces moyens de calcul 36 prennent également en compte les conditions atmosphériques (liaison 34), la configuration aéronef (liaison 33) et les paramètres courants de l'aéronef (liaison 38). Une commande d'aérofreins est calculée à partir de ces informations, cette commande est ensuite envoyée vers la cinématique des spoilers (liaison 39). Cette cinématique spoilers fait le lien entre la commande d'aérofreins et le braquage des surfaces aérodynamiques. En même temps, un profil moyen d'aérofreins et éventuellement un niveau de poussée associé sont fournis aux moyens 8 de prédiction de trajectoire (liaison 30). Ces derniers tiennent compte de cette valeur pour afficher la trajectoire que l'aéronef va voler. De même, une commande est également envoyée aux moteurs 6 (liaison 40).

Dans le cas particulier (illustré en traits mixtes sur la figure 1) de suivi d'un plan de vol préprogrammé (lorsque les contraintes d'altitude et/ou de vitesses sont connues à l'avance et géographiquement positionnées), les contraintes sont définies par le plan de vol (élément 41). L'équipage a seulement la tâche de valider les contraintes du plan vol à l'aide des moyens 4 (liaison 42). La validation fixe la distance d'atteinte de la cible de vitesse et/ou d'altitude. Pour la boucle de commande, l'origine des contraintes est transparente.

Dans le cas particulier de suivi d'un plan de vol préprogrammé, le système de gestion de vol de type FMS construit la trajectoire volée par l'aéronef. Cette trajectoire est ensuite affichée par l'intermédiaire des moyens d'affichage 9 (qui la reçoivent via une liaison 43).

Selon l'invention, le calcul de la trajectoire prédite est basé sur la connaissance de la logique opérationnelle, des lois de guidages latéral, vertical et de vitesse du pilote automatique, ainsi que sur les performances de l'aéronef, tel que représenté sur la figure 5.

Les moyens 8 comprennent notamment, comme représenté sur cette figure 5 :
- une logique opérationnelle 45 qui reçoit les modes engagés et armés, les consignes et des informations de piste, et qui émet le mode de prédiction ;
- une modélisation latérale 46 qui reçoit des paramètres courants et passés (liaison 47), une consigne latérale (liaison 48), et une vitesse vraie d'un moyen 59, ainsi que le mode de prédiction, et qui calcule un angle de roulis ;
- une modélisation de vitesse 49 qui reçoit des paramètres courants et passés (liaison 47), une consigne de vitesse (liaison 50), ainsi que le mode de prédiction, et qui calcule une accélération ;
- une modélisation verticale 51 qui reçoit des paramètres courants et passés (liaison 47), une consigne d'altitude (liaison 52), ainsi que le mode de prédiction, et qui calcule une pente ;
- une logique de dynamique de vol 56 qui reçoit l'angle de roulis, une vitesse vraie du moyen 59 et le vent, et qui calcule le cap ;
- un module de performance 53 de l'aéronef qui reçoit l'angle de roulis, l'accélération et la pente, ainsi que des informations relatives à l'aéronef (liaison 54) et des données atmosphériques (liaison 55), et qui calcule un couple d'accélération et de pente ;
- le moyen de traitement 59 qui calcule, à partir de ce couple, des paramètres courants et passés (liaison 47) et de données atmosphériques (liaison 55), le vent, la vitesse vraie, la vitesse sol et l'altitude ; et
- un moyen 60 de calcul de trajectoire qui déduit la trajectoire et les positions d'atteinte des consignes de vitesse et d'altitude à l'aide du cap, du vent, de la vitesse sol et de l'altitude.

Deux modes de calcul différents peuvent être mis en oeuvre pour le calcul de trajectoire :
- un premier mode de calcul utilise un calcul vectoriel. Une trajectoire entière est calculée dans un premier temps. Les évolutions latérales, verticales et de vitesse sont prédéfinies selon l'expérience et paramétrisées selon une liste de paramètres représentant l'état passé et l'état courant du vol de l'aéronef. Les sorties sont les vecteurs trajectoire x, y, s, z et la position x, y, s, z de l'atteinte des valeurs cible de vitesse et d'altitude. Les coordonnées latérales (x, y), verticales z et curvilignes s sont définies dans le référentiel de l'aéronef. En cas de changement de mode détecté dans l'horizon de prédiction, le calcul vectoriel est refait à partir de ce changement de mode. Ce calcul vectoriel peut également être re-exécuté pour prendre en compte des données de performance de l'aéronef, du vent, de la température plus précises jusqu'à l'atteinte d'une stabilisation de la précision ; et
- un deuxième mode de calcul peut être de type itératif. Les paramètres de vol des itérations courantes et précédentes sont requis pour calculer la position de l'aéronef à l'itération suivante. La modélisation latérale, vertical et de vitesse est plus proche des lois de guidage dans ce deuxième mode de calcul.

Dans le cas d'une contrainte imposée par le pilote, lorsque l'aéronef est en mode de montée ou de descente en respectant une vitesse verticale (V/S) ou une pente (FPA), la fonction de prédiction de trajectoire peut être utilisée pour calculer la consigne en V/S ou FPA faisant passer la trajectoire au plus proche de la contrainte imposée par le pilote. La figure 6 illustre une manière d'utiliser la prédiction de trajectoire pour en déduire un taux de montée contraint (V/S ou FPA) à partir d'une contrainte sur l'altitude cible.

Sur cette figure 6, on a représenté :
- un moyen 62 qui fait la somme du taux de montée cible (reçu par une liaison 63) et d'une correction du taux de montée cible (reçue par une liaison 64) ;
- un moyen 65 d'initiation du taux de montée cible (avec une liaison 61 entre les moyens 62 et 65) ;
- un moyen 66 de calcul de la trajectoire (relié au moyen d'initiation 65 par une liaison 67), qui fournit la distance en avant de l'aéronef où sera atteinte l'altitude cible ;
- un moyen 68 qui calcule la différence entre la distance d'atteinte de l'altitude cible reçue du moyen de calcul 66 par une liaison 69 et une contrainte sur l'altitude cible reçue par une liaison 70 ; et
- un moyen 71 qui multiplie cette différence, illustrant une erreur de distance d'atteinte d'altitude cible reçue par une liaison 72, par un gain et qui communique la valeur obtenue par la liaison 64.

Le principe est de comparer l'atteinte de l'altitude cible avec une valeur de taux de montée cible, de regarder l'erreur de cette prédiction par rapport à la contrainte fixée par le pilote, et à partir de cette erreur, de générer une correction de la valeur du taux de montée cible. Au fur et à mesure des itérations, on arrive alors à en déduire la valeur du taux de montée cible passant au plus près de la contrainte.

Par ailleurs, des moyens 73 (représentés sur la figure 7) faisant partie des moyens 36 calculent la commande d'aérofreins à appliquer, le profil d'aérofreins moyen et la commande moteurs. Les moyens 73 sont basés sur le calcul de la pente totale cible. Ce calcul permet l'estimation du niveau moyen d'aérofreins à appliquer le long de la trajectoire. L'estimation est faite à partir de la connaissance des performances de l'aéronef. Ensuite, ce niveau moyen d'aérofreins est ajusté avec un asservissement qui tient compte de la pente totale courante de l'aéronef.

Pour ce faire, lesdits moyens 73 comportent, comme représenté sur la figure 7 :
- un moyen 74 de calcul de la pente totale, qui reçoit des données atmosphériques (via la liaison 34) et des paramètres courants de vol (via la liaison 38) ;
- un moyen 75 de calcul de la cible de pente totale qui reçoit des données atmosphériques (via la liaison 34), des contraintes (via la liaison 37) et des paramètres de vol courants (via la liaison 33) ;
- un moyen de calcul 76 qui fait la différence entre la pente totale et la cible de pente totale ;
- un élément 77 qui multiplie cette différence par un gain ;
- des éléments 78 (de multiplication de gain) et 79 (d'intégration) qui calculent les valeurs de commande des moteurs ;
- des éléments 80 (de multiplication de gain) et 81 (d'intégration) qui calculent les valeurs de commande des aérofreins ; et
- un module de performance 82 de l'aéronef qui reçoit la cible de pente totale et la configuration de l'aéronef et qui détermine un profil d'aérofreins (qui est transmis par la liaison 30) et un niveau moyen d'aérofreins (qui est transmis à l'élément 81).

Sur les figures 8 à 10, on présente un exemple illustrant les étapes et les actions/affichages associés, lors de la création d'un rendez-vous en altitude, depuis un mode de descente sans contrainte. Ainsi :
- tout d'abord le pilote sélectionne sur l'unité d'interface 2 une nouvelle valeur d'altitude et la valide. Le dispositif 1 génère alors un retour en temps réel de la trajectoire qui sera volée. La figure 8 illustre la prédiction de la trajectoire volée par l'aéronef sans braquage d'aérofreins, avec la cible d'altitude 83 ;
- le pilote spécifie ensuite la distance en avant de l'aéronef à laquelle il souhaite atteindre la nouvelle consigne d'altitude. Il le fait, dans cet exemple, en interagissant directement avant le point de rejointe du niveau d'altitude cible, en agissant sur un objet graphique 84 avec un doigt 85 de sa main 86. Cet objet graphique 84 peut ainsi être déplacé comme illustré par une double flèche 87. Dès le début de l'interaction, une trajectoire 88 de rejointe du niveau cible au plus tôt (avec plein braquage d'aérofreins) est affichée afin que le pilote puisse visualiser sa latitude d'action ; et
- après l'introduction d'une contrainte géographique, tant que la contrainte n'est pas atteinte, les moyens 5 réalisent l'asservissement sur la tenue de cette contrainte, en procédant à des ajustements des aérofreins, si besoin, suite à des perturbations extérieures (vent...).

Sur la figure 10, on a représenté la trajectoire 89 volée par l'aéronef avec le braquage d'aérofreins nécessaire pour tenir la contrainte.

## Revendications

1. Procédé d'aide à la gestion du vol d'un aéronef, procédé selon lequel on prévoit une unité d'interface (2) permettant à un pilote d'entrer au moins l'une des consignes suivantes : une consigne de vitesse et une consigne d'altitude, ainsi que des moyens de pilotage automatique qui appliquent de façon automatique audit aéronef des consignes ainsi entrées,
**caractérisé en ce que** :
a) on prévoit, de plus, des moyens d'interface (4) permettant à un pilote de générer une contrainte géographique, représentée par une distance, le long d'une trajectoire planifiée, par rapport à l'avant de l'aéronef, à laquelle le pilote souhaite qu'une consigne entrée soit atteinte ; et
b) on asservit automatiquement, de façon combinée, un système de poussée automatique (6) de l'aéronef et des aérofreins (7) de l'aéronef pour que l'aéronef atteigne ladite consigne entrée, à la position définie par ladite contrainte géographique.

2. Procédé selon la revendication 1,
**caractérisé en ce que**, de façon automatique, à une étape c), on détermine la trajectoire volée par l'aéronef selon les consignes du mode de guidage actif et selon le profil de poussée et des aérofreins commandé pour atteindre ladite consigne à ladite contrainte géographique, et on présente au moins une partie de ladite trajectoire sur un écran de visualisation (10), ainsi que les endroits d'atteinte des consignes de vitesse et d'altitude.

3. Procédé selon la revendication 2,
**caractérisé en ce que** on prévoit sur ledit écran de visualisation (10) au moins un objet graphique (84) qui est réalisé sous forme d'un moyen d'interaction qui représente :
- d'une part, un élément de restitution qui indique l'endroit d'atteinte de ladite consigne ; et
- d'autre part, un élément de commande qui peut être saisi et déplacé par un pilote afin de modifier la distance à l'avant de l'aéronef, à laquelle il souhaite qu'une consigne entrée soit atteinte, et ainsi de générer une contrainte géographique.

4. Procédé selon l'une quelconque des revendications précédentes,
**caractérisé en ce que** l'on détermine un profil d'aérofreins qui assure l'atteinte d'une contrainte géographique générée par le pilote, tout en satisfaisant au moins un critère d'optimisation particulier.

5. Procédé selon l'une quelconque des revendications précédentes,
**caractérisé en ce que** l'on détermine le point auquel une consigne entrée peut être atteinte au plus tôt par l'aéronef, et on présente sur un écran de visualisation (10) un symbole (19, 20) qui localise ce point.

6. Procédé selon la revendication 2,
**caractérisé en ce que** l'on détermine et on intègre dans l'affichage les phases transitoires de la trajectoire de vol.

7. Procédé selon l'une quelconque des revendications précédentes,
**caractérisé en ce que** l'on détermine et on affiche une trajectoire prédite (22, 23) susceptible d'être suivie par l'aéronef avec les aérofreins braqués au maximum.

8. Procédé selon l'une quelconque des revendications précédentes,
**caractérisé en ce que**, lorsque l'aéronef est en montée ou en descente en respectant une consigne de vitesse verticale ou de pente, on prévoit des moyens permettant à un opérateur de définir une nouvelle valeur cible correspondante à l'atteinte d'une altitude cible à une distance à l'avant de l'aéronef fixée par le pilote.

9. Procédé selon l'une quelconque des revendications précédentes,
**caractérisé en ce que**, l'on applique ledit procédé à des consignes, dites préréglées, qui seront uniquement appliquées à l'aéronef après une validation.

10. Procédé selon l'une quelconque des revendications précédentes, **caractérisé en ce que** l'on applique au moins lesdites étapes a) à c) dans le cas particulier de suivi d'un plan de vol préprogrammé.

11. Dispositif d'aide à la gestion du vol d'un aéronef, ledit dispositif comprenant une unité d'interface (2) permettant à un pilote d'entrer au moins l'une des consignes suivantes : une consigne de vitesse et une consigne d'altitude, ainsi que des moyens de pilotage automatique qui appliquent de façon automatique audit aéronef des consignes entrées à l'aide de ladite unité d'interface,
**caractérisé en ce qu'**il comporte de plus :
- des moyens d'interface (4) permettant à un pilote de générer une contrainte géographique, représentée par une distance, le long d'une trajectoire planifiée, par rapport à l'avant de l'aéronef, à laquelle il souhaite qu'une consigne entrée soit atteinte ; et
- des moyens d'asservissement (5) qui commandent automatiquement, de façon combinée, un système de poussée automatique (6) de l'aéronef et des aérofreins (7) de l'aéronef pour que l'aéronef atteigne ladite consigne entrée, à la position définie par ladite contrainte géographique.

12. Dispositif selon la revendication 11,
**caractérisé en ce qu'**il comporte de plus, des moyens (8) pour déterminer, de façon automatique, la trajectoire suivie par l'aéronef pour respecter ladite consigne et ladite contrainte géographique, et des moyens d'affichage (9) pour présenter ladite trajectoire sur un écran de visualisation (10).

13. Dispositif selon la revendication 12,
**caractérisé en ce que** ledit écran de visualisation (10) comprend au moins un objet graphique (84) qui est réalisé sous forme d'un moyen d'interaction qui représente :
- d'une part, un élément de restitution qui indique l'endroit d'atteinte de ladite consigne ; et
- d'autre part, un élément de commande qui peut être saisi et déplacé par un pilote afin de modifier la distance à l'avant de l'aéronef, à laquelle il souhaite qu'une consigne entrée soit atteinte, et ainsi de générer une contrainte géographique.

14. Dispositif selon l'une des revendications 11 à 13,
**caractérisé en ce que** lesdits moyens d'asservissement (5) comportent des moyens (36) de détermination automatique de commandes du système de poussée (6) et des aérofreins (7).

15. Aéronef,
**caractérisé en ce qu'**il comporte un dispositif (1) tel que celui spécifié sous l'une quelconque des revendications 11 à 14.

## Patentansprüche

1. Verfahren zur Unterstützung des Flugmanagements eines Luftfahrzeugs, wobei eine Schnittstelleneinheit (2), die einem Piloten die Eingabe mindestens eines der folgenden Vorgabewerte: eines Geschwindigkeitsvorgabewertes und eines Flughöhenvorgabewertes, ermöglicht, sowie Mittel zur automatischen Führung, welche die so eingegebenen Vorgabewerte automatisch auf das Luftfahrzeug anwenden, bereitgestellt sind, **dadurch gekennzeichnet, dass**:
a) darüber hinaus Schnittstellenmittel (4) bereitgestellt sind, die einem Piloten die Erzeugung einer geografischen Einschränkung ermöglichen, die durch eine Distanz entlang einer geplanten Bahn in Bezug auf den Bereich vor dem Luftfahrzeug gebildet wird, in welcher der Pilot das Erreichen eines eingegebenen Vorgabewertes wünscht; und
b) ein automatisches Schubsystem (6) des Luftfahrzeugs und Luftbremsen (7) des Luftfahrzeugs automatisch in Kombination gesteuert werden, sodass das Luftfahrzeug den eingegebenen Vorgabewert an der durch die geografische Einschränkung definierten Position erreicht.

2. Verfahren nach Anspruch 1,
**dadurch gekennzeichnet, dass** automatisch in einem Schritt c) die Bahn bestimmt wird, die vom Luftfahrzeug gemäß den Vorgabewerten des aktiven Führungsmodus und gemäß dem Schub- und Luftbremsenprofil, das so gesteuert wird, dass der Vorgabewert an der geografischen Einschränkung erreicht wird, geflogen wird, und mindestens ein Teil der Bahn sowie die Orte, an denen die Vorgabewerte für die Geschwindigkeit und die Flughöhe erreicht werden, auf einem Bildschirm (10) angezeigt werden.

3. Verfahren nach Anspruch 2,
**dadurch gekennzeichnet, dass** auf dem Bildschirm (10) mindestens ein grafisches Objekt (84) bereitgestellt ist, das in Form eines Interaktionsmittels ausgeführt ist, das Folgendes darstellt:
- einerseits ein Wiedergabeelement, das den Ort anzeigt, an dem der Vorgabewert erreicht wird, und
- andererseits ein Bedienelement, das von einem Piloten erfasst und bewegt werden kann, um die Distanz vor dem Luftfahrzeug zu ändern, in welcher er das Erreichen eines eingegebenen Vorgabewerts wünscht, und um auf diese Weise eine geografische Einschränkung zu erzeugen.

4. Verfahren nach einem der vorhergehenden Ansprüche,
**dadurch gekennzeichnet, dass** ein Luftbremsenprofil bestimmt wird, welches das Erreichen einer vom Piloten erzeugten geografischen Einschränkung gewährleistet, wobei mindestens ein bestimmtes Optimierungskriterium erfüllt wird.

5. Verfahren nach einem der vorhergehenden Ansprüche,
**dadurch gekennzeichnet, dass** der Punkt bestimmt wird, an dem ein eingegebener Vorgabewert vom Luftfahrzeug frühestens erreicht werden kann, und auf dem Bildschirm (10) ein Symbol (19, 20) dargestellt wird, das diesen Punkt lokalisiert.

6. Verfahren nach Anspruch 2,
**dadurch gekennzeichnet, dass** die Übergangsphasen der Flugbahn bestimmt und in die Anzeige integriert werden.

7. Verfahren nach einem der vorhergehenden Ansprüche,
**dadurch gekennzeichnet, dass** eine vorhergesagte Bahn (22, 23), der das Luftfahrzeug mit maximal eingeschlagenen Luftbremsen wahrscheinlich folgen wird, bestimmt und angezeigt wird.

8. Verfahren nach einem der vorhergehenden Ansprüche,
**dadurch gekennzeichnet, dass**, wenn das Luftfahrzeug sich im Steig- oder im Sinkflug befindet, wobei es einen Vorgabewert für die vertikale Geschwindigkeit oder den Flugbahnwinkel einhält, Mittel bereitgestellt sind, die einer Bedienperson die Definition eines neuen Zielwerts ermöglichen, der dem Erreichen einer vom Piloten festgelegten Zielhöhe in einem Abstand vor dem Luftfahrzeug entspricht.

9. Verfahren nach einem der vorhergehenden Ansprüche,
**dadurch gekennzeichnet, dass** das Verfahren auf Vorgabewerte angewandt wird, welche als voreingestellt bezeichnet werden, die nur nach einer Validierung auf das Luftfahrzeug angewandt werden.

10. Verfahren nach einem der vorhergehenden Ansprüche,
**dadurch gekennzeichnet, dass** mindestens die Schritte a) bis c) im speziellen Fall des Verfolgens eines vorprogrammierten Flugplans angewandt werden.

11. Vorrichtung zur Unterstützung des Flugmanagements eines Luftfahrzeugs, wobei die Vorrichtung eine Schnittstelleneinheit (2), die einem Piloten die Eingabe mindestens eines der folgenden Vorgabewerte: eines Geschwindigkeitsvorgabewertes und eines Flughöhenvorgabewertes, ermöglicht, sowie Mittel zur automatischen Führung, welche die mittels der Schnittstelleneinheit eingegeben Vorgabewerte automatisch auf das Luftfahrzeug anwenden, umfasst,
**dadurch gekennzeichnet, dass** sie darüber hinaus umfasst:
- Schnittstellenmittel (4), die einem Piloten die Erzeugung einer geografischen Einschränkung ermöglichen, die durch eine Distanz entlang einer geplanten Bahn in Bezug auf den Bereich vor dem Luftfahrzeug gebildet wird, in welcher er das Erreichen eines eingegebenen Vorgabewertes wünscht; und
- Regelungsmittel (5), die ein automatisches Schubsystem (6) des Luftfahrzeugs und Luftbremsen (7) des Luftfahrzeugs automatisch in Kombination steuern, sodass das Luftfahrzeug den eingegebenen Vorgabewert an der durch die geografische Einschränkung definierten Position erreicht.

12. Vorrichtung nach Anspruch 11,
**dadurch gekennzeichnet, dass** sie darüber hinaus Mittel (8) zur automatischen Bestimmung der Bahn, der das Luftfahrzeug folgt, um den Vorgabewert und die geografische Einschränkung einzuhalten, und Anzeigemittel (9) zur Darstellung der Bahn auf einem Bildschirm (10) umfasst.

13. Vorrichtung nach Anspruch 12,
**dadurch gekennzeichnet, dass** der Bildschirm (10) mindestens ein grafisches Objekt (84) umfasst, das in Form eines Interaktionsmittels ausgeführt ist, das Folgendes darstellt:
- einerseits ein Wiedergabeelement, das den Ort anzeigt, an dem der Vorgabewert erreicht wird, und
- andererseits ein Bedienelement, das von einem Piloten erfasst und bewegt werden kann, um die Distanz vor dem Luftfahrzeug zu ändern, in welcher er das Erreichen eines eingegebenen Vorgabewerts wünscht, und um auf diese Weise eine geografische Einschränkung zu erzeugen.

14. Vorrichtung nach einem der Ansprüche 11 bis 13,
**dadurch gekennzeichnet, dass** die Regelungsmittel (5) Mittel (36) zur automatischen Bestimmung von Befehlen des Schubsystems (6) und der Luftbremsen (7) umfassen.

15. Luftfahrzeug,
**dadurch gekennzeichnet, dass** es eine Vorrichtung (1) wie diejenige umfasst, die in einem der Ansprüche 11 bis 14 aufgeführt ist.

## Claims

1. Method for aiding the management of the flight of an aircraft, according to which method there is envisaged an interface unit (2) allowing a pilot to enter at least one of the following setpoints: a speed setpoint and an altitude setpoint, as well as means of automatic piloting which apply, in an automatic manner to said aircraft, setpoints thus entered,
**characterised in that**:
a) interface means (4) are envisaged, moreover, allowing a pilot to generate a geographical constraint represented by a distance, along a planned trajectory, relative to the front of the aircraft, at which the pilot wishes that a setpoint entered be attained; and
b) an automatic thrust system (6) of the aircraft and airbrakes (7) of the aircraft are automatically servocontrolled, in a combined manner, so that the aircraft attains said setpoint entered, at the position defined by said geographical constraint.

2. Method according to claim 1,
**characterised in that**, in an automatic manner, in a step c), the trajectory flown by the aircraft is determined according to the setpoints of the active guidance mode and according to the thrust and airbrakes profile controlled so as to attain said setpoint at said geographical constraint, and at least one part of said trajectory is presented on a viewing screen (10), together with the locations at which the speed and altitude setpoints are attained.

3. Method according to claim 2,
**characterised in that** there is envisaged on said viewing screen (10) at least one graphical object (84) which is effected in the form of an interaction means which represents:
- on the one hand, a restitution element which indicates the location of attainment of said setpoint; and
- on the other hand, a control element which can be grasped and moved by a pilot in order to modify the distance ahead of the aircraft, at which he wishes that a setpoint entered be attained, and thus to generate a geographical constraint.

4. Method according to any one of the preceding claims,
**characterised in that** an airbrakes profile is determined which ensures the attainment of a geographical constraint generated by the pilot, while satisfying at least one particular optimization criterion.

5. Method according to any one of the preceding claims,
**characterised in that** the point at which an entered setpoint can be attained at the earliest possible by the aircraft is determined, and a symbol (19, 20) which locates this point is presented on a viewing screen (10).

6. Method according to claim 2,
**characterised in that** the transient phases of the flight trajectory are determined and are integrated into the display.

7. Method according to any one of the preceding claims,
**characterised in that** a predicted trajectory (22, 23) liable to be followed by the aircraft with the airbrakes deflected to the maximum is determined and is displayed.

8. Method according to any one of the preceding claims,
**characterised in that**, when the aircraft is climbing or descending while complying with a vertical speed setpoint or a slope setpoint, means are envisaged allowing an operator to define a new target value corresponding to the attainment of a target altitude at a distance ahead of the aircraft that is fixed by the pilot.

9. Method according to any one of the preceding claims,
**characterised in that**, said method is applied to so-called preadjusted setpoints, which will only be applied to the aircraft after a validation.

10. Method according to any one of the preceding claims,
**characterised in that** at least said steps a) to c) are applied in the particular case of following a preprogrammed flight plan.

11. Device for aiding the management of the flight of an aircraft, said device comprising an interface unit (2) allowing a pilot to enter at least one of the following setpoints: a speed setpoint and an altitude setpoint, as well as means of automatic piloting which apply, in an automatic manner to said aircraft, setpoints entered with the aid of said interface unit, **characterised in that** it comprises moreover:
- interface means (4) allowing a pilot to generate a geographical constraint, represented by a distance, along a planned trajectory, relative to the front of the aircraft, at which he wishes that a setpoint entered be attained; and
- servocontrol means (5) which automatically control, in a combined manner, an automatic thrust system (6) of the aircraft and airbrakes (7) of the aircraft so that the aircraft attains said setpoint entered, at the position defined by said geographical constraint.

12. Device according to claim 11,
**characterised in that** it comprises moreover, means (8) for determining, in an automatic manner, the trajectory followed by the aircraft so as to comply with said setpoint and said geographical constraint, and display means (9) for presenting said trajectory on a viewing screen (10).

13. Device according to claim 12,
**characterised in that** said viewing screen (10) comprises at least one graphical object (84) which is effected in the form of an interaction means which represents:
- on the one hand, a restitution element which indicates the location of attainment of said setpoint; and
- on the other hand, a control element which can be grasped and moved by a pilot in order to modify the distance ahead of the aircraft, at which he wishes that a setpoint entered be attained, and thus to generate a geographical constraint.

14. Device according to one of the claims 11 to 13,
**characterised in that** said servocontrol means (5) comprise means (36) of automatic determination of controls of the thrust system (6) and airbrakes (7).

15. Aircraft,
**characterised in that** it comprises a device (1) such as that specified under any one of the claims 11 to 14.
